# EUROPÄISCHE PATENTSCHRIFT

(11) **EP 1 695 802 B1**
(45) Veröffentlichungstag und Bekanntmachung des Hinweises auf die Patenterteilung: **05.09.2007**
(21) Anmeldenummer: 05004280.3
(22) Anmeldetag: 28.02.2005
(51) Int. Cl.: B26D 7/20, B26D 7/06, B27C 1/12, B65G 47/52, B65G 21/14

(54) **Vorrichtung und Verfahren zum Lagern und Abtransportieren von Werkstücken zur Verwendung mit einer Trenneinrichtung**
Device and method for the transport and storage of workpieces to be used with a cutting device
Dispositif et méthode pour le transport et l'accumulation de pièces pour l'usage avec un dispositif de coupe

(43) Veröffentlichungstag der Anmeldung: 30.08.2006
(73) Patentinhaber: Diem, Reinhard, 71083 Herrenberg (DE)
(72) Erfinder: Diem, Reinhard, 71083 Herrenberg (DE)
(74) Vertreter: Klocke, Peter

(56) Entgegenhaltungen:
- WO-A-03/016004
- US-A- 3 262 348

## Beschreibung

Die Erfindung betrifft eine Vorrichtung zum Lagern von plattenförmigen Werkstücken zur Verwendung in einer Trenneinrichtung, die während des Trennvorgangs in X-/Y-Richtungen bewegbar ist, wobei die X-Vorschubrichtung geradeaus und die Y-Vorschubrichtung quer dazu ist, mit einem ersten Auflagetisch mit einer ersten Auflagefläche und einer zweiten Auflagefläche, wobei die beiden Auflageflächen voneinander beabstandet sind und einen Spalt bilden, der sich zumindest unter der Trenneinheit der Trenneinrichtung befindet und der durch Vergrößern der einen und Verkleinern der anderen Auflagefläche in Y-Richtung variierbar ist, einem die Auflagefläche bildenden Gliederband aus einzelnen Drahtelementen, die auf dem Maschinenrahmen an ihren Stirnseiten geführt sind, wobei das Gliederband an beiden Enden an dem Maschinenrahmen befestigt ist und damit das eine Ende der Auflageflächen bildet, Umlenkeinrichtungen zur Führung des Gliederbandes mit das andere Ende der jeweiligen Aufnahmefläche bildenden ersten Umlenkeinrichtungen zur Bildung des Spaltes und zweiten Umlenkeinrichtungen unterhalb der Auflageflächen. Die Erfindung betrifft außerdem ein Verfahren zum Lagern und Abtransportieren von plattenförmigen Werkstücken auf einer Auflagevorrichtung, die mittels einer Trenneinrichtung getrennt werden, wobei die Auflagevorrichtung eine erste Auflagefläche und eine zweite Auflagefläche aufweist, die gemeinsam einen ersten Auflagetisch bilden und die voneinander beabstandet sind und einen Spalt bilden, der sich zumindest unter der Trenneinheit befindet und entsprechend der Bewegung der Trenneinheit durch Vergrößern der einen Auflagefläche und gleichzeitiges Verkleinern der anderen Auflagefläche bewegt wird.

Eine derartige Vorrichtung ist aus der US 3 262 348 bekannt. Dort wird in der vorstehend beschriebenen Art und Weise ein Spalt unter einer Schneideinrichtung bewegt, wobei die Auflagefläche aus einem flexiblen Material wie beispielsweise einer Vielzahl von Stoffschichten, die auf einem Band, das die Tischoberseite bildet, gebildet wird. Das Band wird um obere und untere Umlenkeinrichtungen geführt und ist beispielsweise aus Leder, Gewebe, Drahtgitter, dünnem rostfreiem Stahl oder anderen flexiblen Materialien hergestellt. Unter dem Band befinden sich eine Vielzahl von Stützstangen, die über ein flexibles Kabel miteinander verbunden sind und für den Transport in entsprechende Ausnehmungen in den Rollen der Umlenkeinrichtungen eingreifen. Die Stützstangen werden beidseitig über einen axialen Verriegelungsstift in dem Maschinenrahmen geführt und gehalten, wobei unterhalb der Stützstangen mitgeführte Führungskufen für die axiale Bewegung der Verriegelungsstifte sorgen.

Die WO 03/016 004 A1, die als Beschreibung des nächstliegenden Standes der Technik angesehen wird, beschreibt eine ähnliche Einrichtung, wobei dort außer der Bewegung des Spaltes während des Trennvorganges auch der Spalt vergrößert werden kann, um beispielsweise die ausgeschnittenen Teile in ein darunter befindliches Behältnis zu leeren und damit einen automatischen Betrieb zu ermöglichen.

Für einen schnellen Ablauf des Schneidvorgangs und auch des Abtransports des geschnittenen Materials, unabhängig davon ob der Ausschnitt wie in der WO 03/016 004 A1 beschrieben nach unten abgeräumt wird, ist es erforderlich, das Material aus dem Schneidbereich schnell und einfach abzutransportieren, damit neues Material für den Schneidvorgang aufgelegt werden kann.

Der vorliegenden Erfindung liegt daher die Aufgabe zu Grunde, eine Vorrichtung und ein Verfahren vorzuschlagen, mit dem das Lagern und zumindest ein Abtransport des Materials möglich ist.

Diese Aufgabe wird erfindungsgemäß durch eine Vorrichtung mit den Merkmalen des Anspruchs 1 sowie durch ein Verfahren gemäß dem Verfahrensanspruch gelöst. Weitere vorteilhafte Ausgestaltungen sind den jeweiligen rückbezogenen Unteransprüchen zu entnehmen.

Gemäß der Erfindung weist die Vorrichtung einen zweiten Auflagetisch auf, der an Stelle von einer Auflagefläche zusammen mit der verbleibenden anderen Auflagefläche in Y-Richtung bewegbar ist und ein raupenförmig bewegtes Endlostransportband mit Umlenkrollen aufweist. Dieser zweite Auflagetisch wird dann in den Bereich des ersten Auflagetisches eingefahren, wenn der Spalt zwischen den beiden Auflageflächen des ersten Auflagetisches so weit an den seitlichen Rand bewegt wurde, dass nur noch eine Auflagefläche vorhanden ist. Der zweite Auflagetisch kann dann zusammen mit dem ersten Auflagetisch in Y-Richtung bewegt werden. Dadurch dass der zweite Auflagetisch ein raupenförmig bewegtes Endlostransportband mit Umlenkrollen aufweist, bewegt sich die Oberfläche des zweiten Auflagetisches in dem Maße unter das Material wie sich die verbleibende Auflagefläche des ersten Auflagetisches nach unten weg bewegt. Dadurch wird nach und nach das Material von dem zweiten Auflagetisch vollständig übernommen.

Damit der zweite Auflagetisch an Stelle des einen Auflagebandes des ersten Auflagetisches treten kann, ohne dass ein Höhenversatz entsteht und der von der zweiten Auflagefläche freigegebene Freiraum von dem zweiten Auflagetisch ausgefüllt werden kann, ist gemäß einer vorteilhaften Ausgestaltung das Gliederband an mindestens einer Transportkette fixiert, die an beiden Enden an dem Maschinenrahmen befestigt ist. Die Transportkette ist länger als die mit den Tragelementen gebildeten Auflageflächen und mindestens an einem Ende eine Auflagefläche so weit überragt, dass die Tragelemente an dieser Seite sich unterhalb der Auflagekante an dem Maschinenrahmen befinden, wenn der Spalt an seiner seitlichen Endposition angekommen ist und einen Freiraum in Höhe des zweiten Arbeitstisches bilden.

Damit die Auflageflächen des ersten Auflagetisches ausreichend stabil für die zu bearbeitenden Werkstücke gestützt sind, liegen die Tragelemente an ihren Stirnseiten über in Längsrichtung der Tragelemente bewegbare Stützelemente auf dem Maschinenrahmen auf. Die Stützelemente können dabei entweder, wie beim Stand der Technik, aus den Tragelementen ausfahrbar sein oder an dem Maschinenrahmen angeordnet sein. Bei der Anordnung am Maschinenrahmen ist es möglich, einseitig fixierte, L-förmige Schwenkelemente zu verwenden, die unter die Tragelemente schwenkbar sind.

Der zweite Auflagetisch ist vorteilhafterweise in den Bereich des ersten Auflagetisches bewegbar, wenn die Tragelemente der nicht mehr verwendeten Auflagefläche sich unter der Auflageebene am Maschinenrahmen befinden.

Für den Transport des zweiten Auflagetisches unter das Werkstück sind zweckmäßigerweise die ersten Umlenkeinrichtungen der verbleibenden Auflagefläche mit den Umlenkrollen des zweiten Arbeitstisches verbindbar. Damit dreht sich das Endlostransportband in exakt der gleichen Geschwindigkeit und benötigt auch keinen zusätzlichen Antrieb. Selbstverständlich muss sichergestellt sein, dass, beispielsweise über eine Zwischenrolle, die Drehrichtungen übereinstimmen.

Vorzugsweise ist der zweite Auflagetisch seitlich auf dem Maschinenrahmen geführt, so dass dadurch ein in dem Maschinenrahmen vorhandener Freiraum für den zweiten Arbeitstisch und dessen Auflagefläche in seiner vollen Breite zur Verfügung steht.

Nach der Trennung des zweiten Auflagetisches von der ersten Umlenkeinrichtung ist zweckmäßigerweise der zweite Auflagetisch ohne Drehung des Endlostransportbandes aus dem Maschinenrahmen verfahrbar, damit das aufliegende Werkstück sicher abtransportiert werden kann.

Grundsätzlich ist es auch möglich, eine entsprechende Einrichtung vorzusehen, die in umgekehrter Art und Weise ein Werkstück zuführt. Dies könnte durch einen auf der gegenüberliegenden Seite des ersten Arbeitstisches angeordneten dritten Arbeitstisch bewerkstelligt werden. In der Regel ist es jedoch ausreichend, den zweiten Arbeitstisch nur für den Abtransport der bearbeiteten Werkstücke und der Restabfälle vorzusehen, da das Auflegen eines neuen Werkstückes durch Handlingseinheiten (Roboter) schneller und präziser durchgeführt werden kann.

Gemäß dem erfindungsgemäßen Verfahren wird zum Abholen des fertigen Werkstückes der Spalt an ein Ende der Auflagevorrichtung bewegt, so dass nur eine Auflagefläche das Werkstück trägt. An Stelle der anderen Auflagefläche wird ein zweiter Arbeitstisch mit der einen Auflagefläche des ersten Arbeitstisches zum anderen Ende der Auflagevorrichtung bewegt, wobei die verbleibende eine Auflagefläche sich verkleinert und dabei das Werkstück vollständig an den zweiten Arbeitstisch übergibt. Anschließend wird der zweite Arbeitstisch mit dem Werkstück aus dem Bereich des ersten Auflagetisches bewegt.

Mit der erfindungsgemäßen Vorrichtung und dem Verfahren ist es somit kostengünstig und schnell möglich, einerseits Werkstücke ohne Beschädigung der Auflageflächen optimal zu schneiden und andererseits das Werkstück und auch den Verschnitt schnell und automatisch abzuräumen.

Nachfolgend wird die Erfindung anhand eines Ausführungsbeispiels näher erläutert. Es stellen dar:
- Figur 1: die schematische Darstellung in der Draufsicht der Auflagevorrich-tung mit den einzelnen Ablaufstufen;
- Figur 2: eine schematische Schnittdarstellung der wesentlichen Elemente der Vorrichtung entsprechend dem Ablauf gemäß Figur 1 b;
- Figur 3: eine Schnittdarstellung entsprechend Figur 2 gemäß dem Ablauf in Figur 1 c;
- Figur 4: eine Schnittdarstellung entsprechend Figur 2 gemäß dem Ablauf in **Figur 1d;**
- Figur 5: eine Schnittdarstellung durch den gesamten Maschinenrahmen im Bereich des ersten Auflagetisches;
- Figur 6: eine vergrößerte Darstellung einer Seite des Maschinenrahmens im Schnitt mit der Führung für den zweiten Auflagetisch;
- Figur 7: eine vergrößerte Darstellung Ausschnittdarstellung von Figur 2 mit der schematischer Darstellung der Ankopplung des zweiten Auflage-tisches an den erste Auflagetisch.

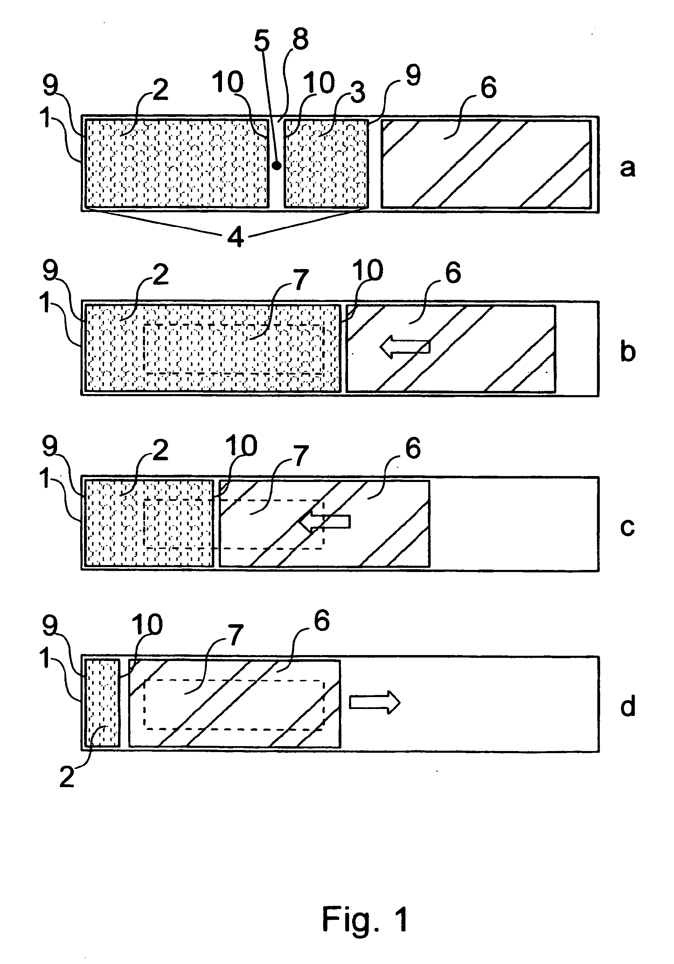

Figur 1 zeigt in schematischer prinzipieller Darstellung von oben eine Auflagevorrichtung 1, die einen Maschinenrahmen aufweist, in dem sich die Auflageflächen 2 und 3 befinden. Die beiden Auflageflächen 2 und 3 weisen ein festes Ende 9 und ein bewegliches Ende 10 auf. Die beiden Auflageflächen 2 und 3 bilden einen ersten Auflagetisch 4, wobei die Auflageflächen 2 und 3 entsprechend der Pfeilrichtung bewegt und damit bei jeweils festem Ende 9 der Auflagetische ihre Größe wechselseitig verkleinern bzw. vergrößern. Des Weiteren weist die Auflagevorrichtung noch einen zweiten Auflagetisch 6 auf. In der Figur 1 a ist die Stellung der Auflageflächen 2, 3 und des Arbeitstisches 6 in dem normalen Bearbeitungszustand beim Trennen eines nicht dargestellten Werkstückes gezeigt. Eine derartige Auflagevorrichtung 1 ist in einer Trenneinrichtung zu integrieren. Diese ist im Einzelnen nicht dargestellt, sondern nur durch eine Trenneinheit 5 symbolisiert. Die Trenneinheit 5, beispielsweise ein Laser oder eine Wasserstrahlschneideinrichtung ist ebenfalls wie die Auflageflächen 2, 3 in Pfeilrichtung und darüber hinaus noch entlang des Spaltes 8 zwischen den beiden Auflageflächen 2, 3 bewegbar.

Figur 1b zeigt den Zustand, in dem die Auflagefläche 2 ihre maximale Größe hat und ein bearbeitetes Werkstück 7 trägt. Die Auflagefläche 3 aus der Figur 1 a ist in den unteren Bereich des Maschinenrahmens 11 der Auflagevorrichtung 1 abgetaucht, so dass der zweite Auflagetisch 6 über die Auflagefläche 3 an die Auflagefläche 2 herangeführt wird und sich in der Auflageebene 19 befindet.

Der Auflagetisch 6 wird dann zusammen mit dem beweglichen Ende 10 der Auflagefläche 2 in Richtung des festen Endes 9 bewegt und übernimmt damit, wie in der Figur 1 c dargestellt, das Werkstück 7.

In der Figur 1d hat der zweite Auflagetisch 6 das Werkstück 7 vollständig übernommen, während die Auflagefläche 2 in ihrer Endposition angelangt ist. Nun bewegt sich der zweite Auflagetisch 6 in Pfeilrichtung aus dem Bereich des ersten Auflagetisches 4 wieder in seine Ausgangsstellung, während der erste Auflagetisch 4 mit seinen beiden Auflageflächen 2, 3 für die Aufnahme des nächsten Werkstückes wieder bereitgemacht wird. Der gesamte Ablauf wird, wie für den Fachmann offensichtlich, durch entsprechende Prozesssteuereinrichtungen gesteuert und geregelt.

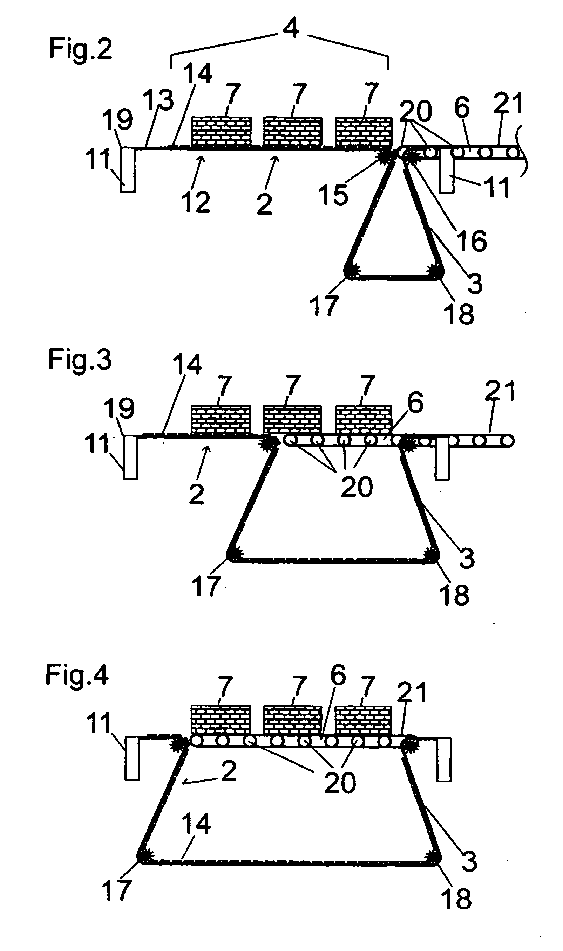

Figur 2 zeigt den Zustand gemäß Figur 1b in einer schematischen Querschnittsdarstellung mit einem schematisch angedeuteten Maschinenrahmen 11, an dem die beiden Enden eines Gliederbandes 12 befestigt sind. Das Gliederband 12 weist zwei Transportketten 13 auf, an denen stabile Tragelemente 14 befestigt sind. Auf dem Gliederband 12 sind einzelne Werkstücke 7 dargestellt. Das Gliederband 12 wird in bekannter Art und Weise über obere Umlenkrollen 15, 16 und untere Umlenkrollen 17, 18 geführt, wobei die Umlenkrollen 15, 17 bzw. 16, 18 mechanisch miteinander verbunden sind und immer gemeinsam in der Figur in dem Maschinenrahmen 11 hin und her bewegt werden. Wie aus der Figur weiter ersichtlich, ist die Transportkette 13 des Gliederbandes 12 länger als die durch die Tragelemente 14 gebildeten Auflageflächen 2, 3. Dies führt dazu, dass, wie in der Figur gezeigt, die Auflagefläche 3, die sich normalerweise rechts von dem Spalt 8 befindet, so weit unter der Auflageebene 19 am Maschinenrahmen 11 abtaucht, dass der zweite Auflagetisch 6 in diese Ebene 19 bewegt werden kann. Der zweite Auflagetisch 6 weist Umlenkrollen 20 und ein darüber bzw. darunter liegendes umlaufendes Endlosband 21 auf, so dass bei der Bewegung des zweiten Auflagetisches 6 in den Bereich des ersten Auflagetisches 4 ein raupenartiger Vorschub entsteht.

Der zweite Auflagetisch 6 kann beispielsweise mit seiner vorderen Umlenkrolle 20' und einer nicht dargestellten Zwischenrolle mit der oberen Rolle 15 verbunden werden, so dass die Drehung der oberen Rolle 15 gleichzeitig eine gleichgerichtete Drehung der vorderen Umlenkrolle 20 bewirkt. Damit wird bei der Verkleinerung der Auflagefläche 2 gemäß Figur 3 der zweite Auflagetisch 6 unter die Werkstücke 7 bewegt und kann diese ohne Schwierigkeiten übernehmen. Die Umlenkrollen 16 und 18 bleiben in ihrer Position am Rand des Maschinenrahmens 11.

Figur 4 zeigt die Auflagevorrichtung in dem Zustand, in dem die Werkstücke 7 vollständig von dem zweiten Auflagetisch 6 übernommen sind. Die Rollen 15 und 17 haben ihre Endstellung erreicht, so dass die Auflagefläche 2 ebenfalls nicht mehr für die Werkstücke zur Verfügung steht. Der zweite Auflagetisch 6 kann nun mit den Werkstücken 7 ohne weitere Drehung der Umlenkrollen 20 aus den Bereichen des ersten Auflagetisches 4 heraus bewegt werden.

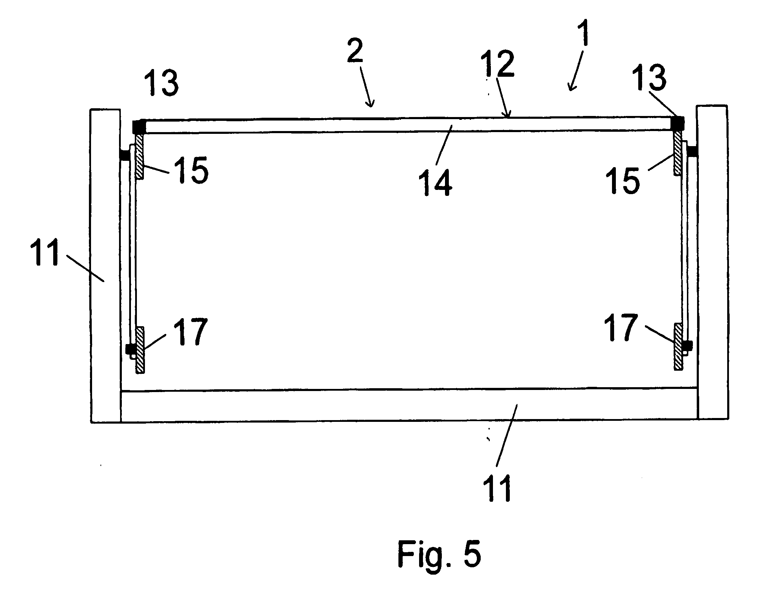

Figur 5 zeigt zur Veranschaulichung den Querschnitt durch eine Auflagevorrichtung 1 mit dem Maschinenrahmen 11, der das Gliederband 12 mit beidseitiger Transportkette 13 sowie den Tragelementen 14 trägt. Der Maschinenrahmen 11 trägt und führt außerdem die über ein Gestänge 22 verbundenen oberen Rollen 15 und unteren Rollen 17 für die Auflagefläche 2. Entsprechend sieht eine Schnittdarstellung mit der Auflagefläche 3 aus.

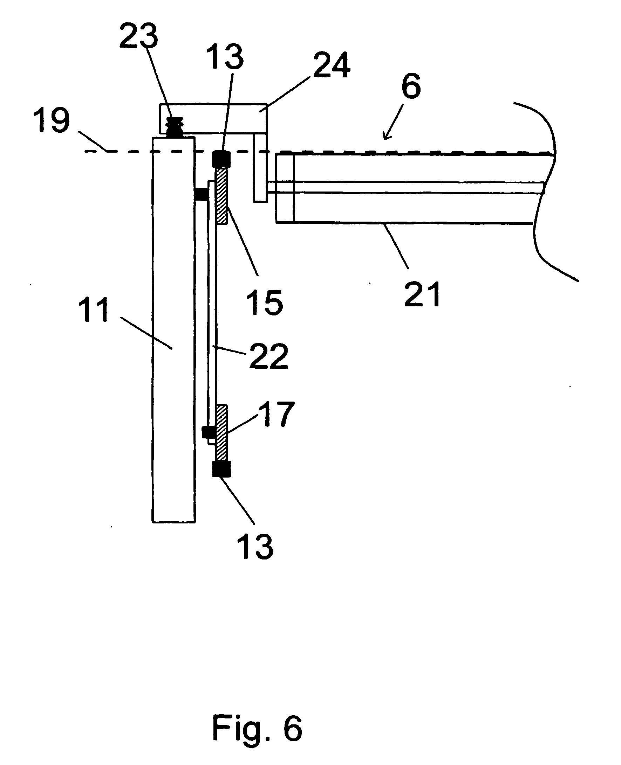

Figur 6 zeigt eine Ausschnittsvergrößerung der Führung an dem Maschinenrahmen 11 mit einer zusätzlichen Führungsschiene 23, an der über Haltearme 24 der zweite Auflagetisch 6 mit dem Endlosband 21 entlang dem Maschinenrahmen 11 bewegt werden kann.

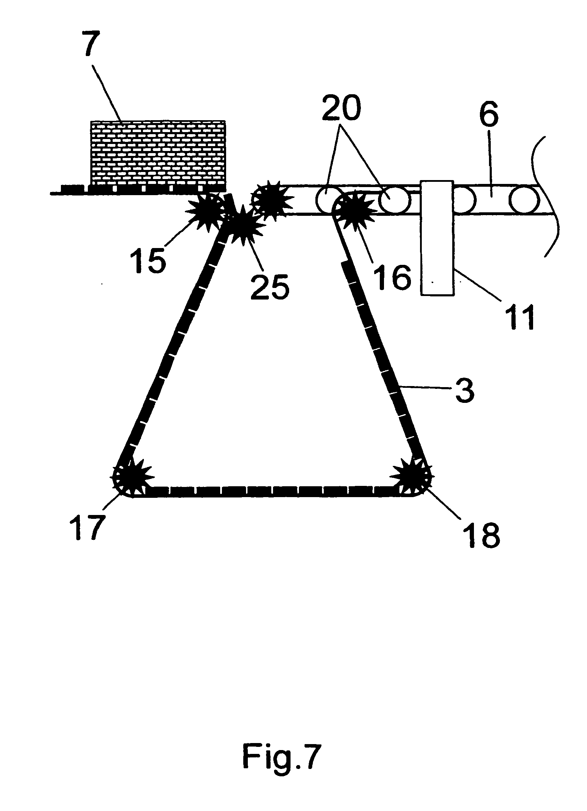

In der Figur 7 ist schematisch ein Antriebsrad 25 dargestellt, das nach einer mechanischen nicht dargestellten Ankopplung des zweiten Auflagetisches 6 an den ersten Auflagetisch 4 für die entsprechende Drehrichtung des Endlostransportbandes 21 sorgt, das dadurch über die obere Rolle 15 der Auflagefläche 2 des ersten Auflagetisches 4 angetrieben wird.

## Patentansprüche

1. Vorrichtung zum Lagern von plattenförmigen Werkstücken (7) zur Verwendung in einer Trenneinrichtung, die während des Trennvorgangs in X-/Y-Richtungen bewegbar ist, wobei die X-Vorschubrichtung geradeaus und die Y-Vorschubrichtung quer dazu ist, mit
einem ersten Auflagetisch (4) mit einer ersten Auflagefläche (2) und einer zweiten Auflagefläche (3), wobei die beiden Auflageflächen (2, 3) voneinander beabstandet sind und einen Spalt (8) bilden, der sich zumindest unter der Trenneinheit (5) der Trenneinrichtung befindet und der durch Vergrößern der einen und Verkleinern der anderen Auflagefläche (2, 3) in Y-Richtung variierbar ist,
einem die Auflageflächen (2, 3) bildenden Gliederband (12) aus einzelnen Tragelementen (14), die auf einem Maschinenrahmen (11) an ihren Stirnseiten geführt sind, wobei das Gliederband (12) an beiden Enden an dem Maschinenrahmen befestigt ist und damit jeweils das eine feste Ende (9) Pder Auflageflächen (2, 3) bildet,
Umlenkeinrichtungen (15 bis 18) zur Führung des Gliederbandes (12) mit das andere bewegliche Ende (10) der jeweiligen Auflagefläche (2, 3) bildenden ersten Umlenkeinrichtungen (15, 16) zur Bildung des Spaltes (8) und zweite Umlenkeinrichtungen (17, 18) unterhalb der Auflageflächen (2, 3),
**gekennzeichnet durch**
einen zweiten Auflagetisch (6), der an Stelle einer Auflagefläche (2, 3) zusammen mit der verbleibenden anderen Auflagefläche (3, 2) in Y-Richtung bewegbar ist und ein raupenförmig bewegtes Endlostransportband (21) mit Umlenkrollen (20) aufweist.

2. Vorrichtung nach Anspruch 1, **dadurch gekennzeichnet, dass** das Gliederband (12) mindestens eine Transportkette (13) aufweist, die an beiden Enden an dem Maschinenrahmen (11) befestigt ist, länger ist als die mit den Tragelementen (14) gebildeten Auflageflächen (2, 3) und mindestens an einem Ende eine Auflagefläche (2, 3) so weit überragt, dass die Tragelemente (14) an dieser Seite sich unterhalb der Auflageebene (19) am Maschinenrahmen (11) befinden, wenn der Spalt (8) an seiner seitlichen Endposition angekommen ist und einen Freiraum mindestens in der Höhe des zweiten Arbeitstisches (6) bilden.

3. Vorrichtung nach Anspruch 2, **dadurch gekennzeichnet, dass** der zweite Auflagetisch (6) in den Bereich des ersten Auflagetisches (4) bewegbar ist, wenn die Tragelemente (14) der nicht mehr verwendeten Auflagefläche (2, 3) sich unter der Auflageebene (19) am Maschinenrahmen (11) befinden.

4. Vorrichtung nach Anspruch 3, **dadurch gekennzeichnet, dass** die ersten Umlenkeinrichtungen (15, 16) der verbleibenden Auflagefläche (2, 3) mit den Umlenkrollen (20) des zweiten Arbeitstisches (6) verbindbar sind.

5. Vorrichtung nach Anspruch 3, **dadurch gekennzeichnet, dass** der zweite Auflagetisch (6) seitlich auf dem Maschinenrahmen (11) geführt ist.

6. Vorrichtung nach Anspruch 4 oder 5, **dadurch gekennzeichnet, dass** der zweite Arbeitstisch (6) nach vollständiger Übernahme des Werkstückes (7) ohne Drehung des Endlostransportbandes (21) aus dem Bereich des ersten Arbeitstisches (4) verfahrbar ist.

7. Verfahren zum Trennen und Abtransportieren von plattenförmigen Werkstücken auf einer Auflagevorrichtung, die mittels einer Trenneinrichtung getrennt werden, wobei die Auflagevorrichtung (1) eine erste Auflagefläche (2) und eine zweite Auflagefläche (3) aufweist, die gemeinsam einen ersten Auflagetisch (4) bilden und die voneinander beabstandet sind und einen Spalt (8) bilden, der sich zumindest unter der Trenneinheit (5) der Trenneinrichtung befindet und entsprechend der Bewegung der Trenneinheit (5) durch Vergrößern der einen Auflagefläche (2, 3) und gleichzeitiges Verkleinern der anderen Auflagefläche (3, 2) bewegt wird,
**dadurch gekennzeichnet, dass**
zum Abholen des fertigen Werkstückes (7) der Spalt (8) an ein Ende des ersten Auflagetisches (4) bewegt wird, so dass eine Auflagefläche (2, 3) das Werkstück trägt,
an Stelle der anderen Auflagefläche (3, 2) ein zweiter Auflagetisch (6) mit der ersten Auflagefläche (2, 3) zum anderen Ende des ersten Auflagetisches (4) bewegt wird, wobei die verbleibende Auflagefläche (2, 3) sich verkleinert und dabei das Werkstück (7) vollständig an den zweiten Auflagetisch (6) übergibt, und anschließend
der zweite Auflagetisch (6) mit dem Werkstück (7) aus dem Bereich des ersten Auflagetisches (4) bewegt wird.

8. Verfahren nach Anspruch 7, **dadurch gekennzeichnet, dass** das Werkstück (7) mittels eines raupenförmig bewegten Endlostransportbandes (21) des zweiten Auflagetisches (6) übernommen wird, wobei das Endlostransportband (21) mit dem ersten Auflagetisch (4) verbunden und von diesem angetrieben wird.

9. Verfahren nach Anspruch 8, **dadurch gekennzeichnet, dass** nach der Übernahme des Werkstückes (7) von dem zweiten Auflagetisch (6) dieser von dem ersten Auflagetisch (4) getrennt und der zweite Auflagetisch (6) ohne Drehung des Transportbandes (21) aus dem Bereich des ersten Auflagetisches (4) bewegt wird.

## Claims

1. Apparatus for storing plate-shaped workpieces (7) for use in a separating means, which is displaceable during the separating operation in X/Y directions, the X advancement direction being rectilinear and the Y advancement direction being transverse thereto,
said apparatus having a first bearing table (4) with a first bearing surface (2) and a second bearing surface (3), the two bearing surfaces (2, 3) being spaced from each other and forming a gap (8) which is situated at least beneath the separating unit (5) of the separating means, and which gap is variable by increasing the one bearing surface and reducing the other bearing surface (2, 3) in the Y direction,
an articulated belt (12) forming the bearing surfaces (2, 3) and comprising individual supporting members (14), which are guided on a machine frame (11) at their end faces, the articulated belt (12) being secured at both ends on the machine frame, and hence respectively forming the one fixed end (9) for the bearing surfaces (2, 3),
guide means (15 to 18) for guiding the articulated belt (12) with first guide means (15, 16), forming the other displaceable end (10) of the respective bearing surface (2, 3), to form the gap (8), and second guide means (17, 18) underneath the bearing surfaces (2, 3),
**characterised by**
a second bearing table (6) which, instead of one bearing surface (2, 3), is displaceable together with the remaining other bearing surface (3, 2) in the Y direction and has an endless conveyor belt (21) with guide rollers (20), which belt is moved in a caterpillar-like manner.

2. Apparatus according to claim 1, **characterised in that** the articulated belt (12) has at least one conveyor chain (13), which is secured at both ends on the machine frame (11) and is longer than the bearing surfaces (2, 3) formed with the supporting members (14) and, at least at one end, a bearing surface (2, 3) protrudes so far that the supporting members (14) are situated on this side underneath the bearing plane (19) on the machine frame (11) when the gap (8) has arrived at its lateral end position and forms a space at least on a level with the second worktable (6).

3. Apparatus according to claim 2, **characterised in that** the second bearing table (6) is displaceable into the region of the first bearing table (4) when the bearing members (14) of the no longer used bearing surface (2, 3) are situated beneath the bearing plane (19) on the machine frame (11).

4. Apparatus according to claim 3, **characterised in that** the first guide means (15, 16) of the remaining bearing surface (2, 3) are connectable to the guide rollers (20) of the second worktable (6).

5. Apparatus according to claim 3, **characterised in that** the second bearing table (6) is guided laterally on the machine frame (11).

6. Apparatus according to claim 4 or 5, **characterised in that** the second worktable (6) is displaceable after the complete acquisition of the workpiece (7) without turning the endless conveyor belt (21) out of the region of the first worktable (4).

7. Method of separating and conveying-away plate-shaped workpieces on a bearing apparatus, which workpieces are separated by means of a separating means, the bearing apparatus (1) having a first bearing surface (2) and a second bearing surface (3), which together form a first bearing table (4) and which are spaced from each other and form a gap (8), which is situated at least beneath the separating unit (5) of the separating means and is moved according to the movement of the separating unit (5) by increasing the one bearing surface (2, 3) and simultaneously reducing the other bearing surface (3, 2),
**characterised in that**,
to collect the finished workpiece (7), the gap (8) is moved to one end of the first bearing table (4), so that one bearing surface (2, 3) supports the workpiece, instead of the other bearing surface (3, 2), a second bearing table (6) is moved with the first bearing surface (2, 3) to the other end of the first bearing table (4), the remaining bearing surface (2, 3) being reduced and, in such case, transferring the workpiece (7) completely onto the second bearing table (6), and subsequently the second bearing table (6) is moved with the workpiece (7) out of the region of the first bearing table (4).

8. Method according to claim 7, **characterised in that** the workpiece (7) is acquired by means of an endless conveyor belt (21) of the second bearing table (6), which belt is moved in a caterpillar-like manner, the endless conveyor belt (21) being connected to the first bearing table (4) and being driven thereby.

9. Method according to claim 8, **characterised in that**, after the acquisition of the workpiece (7) from the second bearing table (6), the latter is separated from the first bearing table (4), and the second bearing table (6) is moved without turning the conveyor belt (21) out of the region of the first bearing table (4).

## Revendications

1. Dispositif pour recevoir des pièces (7) en forme de plaques à utiliser dans un dispositif de coupe qui peut être déplacé dans des directions X/Y pendant l'opération de coupe, la direction d'avancement X allant tout droit et la direction d'avancement Y étant transversale à la direction X, avec
un premier plateau d'appui (4) avec une première surface d'appui (2) et une deuxième surface d'appui (3), les deux surfaces d'appui (2, 3) étant distantes l'une de l'autre et formant une fente (8) qui se trouve au moins en dessous de l'unité de coupe (5) du dispositif de coupe et qu'on peut faire varier en allongeant l'une des surfaces d'appui (2, 3) et en raccourcissant l'autre en direction Y,
une bande transporteuse à maillons (12) formant les surfaces d'appui (2, 3) et constituée d'éléments porteurs individuels (14) qui sont guidés par leurs côtés frontaux sur un bâti de machine (11), la bande transporteuse à maillons (12) étant fixée aux deux extrémités sur le bâti de machine et formant ainsi l'extrémité fixe respective (9) des surfaces d'appui (2, 3),
des organes de renvoi (15 à 18) pour guider la bande transporteuse à maillons (12), avec des premiers organes de renvoi (15, 16) formant l'autre extrémité (10), mobile, de la surface d'appui respective (2, 3) afin de former la fente (8), et avec des deuxièmes organes de renvoi (17, 18) en dessous des surfaces d'appui (2, 3),
**caractérisé par**
un deuxième plateau d'appui (6), qui peut être déplacé en direction Y à la place d'une surface d'appui (2, 3) conjointement avec l'autre surface d'appui restante (3, 2) et qui présente une bande transporteuse sans fin (21) déplacée à la manière de chenilles et pourvue de poulies de renvoi (20).

2. Dispositif selon la revendication 1, **caractérisé en ce que** la bande transporteuse à maillons (12) présente au moins une chaîne transporteuse (13) qui est fixée aux deux extrémités sur le bâti de machine (11), est plus longue que les surfaces d'appui (2, 3) formées par les éléments porteurs (14) et dépasse au moins à une extrémité une surface d'appui (2, 3) suffisamment pour que les éléments porteurs (14) se trouvent de ce côté en dessous du plan d'appui (19) sur le bâti de machine (11), lorsque la fente (8) a atteint sa position latérale terminale, et forment un espace libre au moins à la hauteur du deuxième plateau de travail (6).

3. Dispositif selon la revendication 2, **caractérisé en ce que** le deuxième plateau d'appui (6) peut être déplacé dans la région du premier plateau d'appui (4) lorsque les éléments porteurs (14) de la surface d'appui (2, 3) qui n'est plus utilisée se trouvent en dessous du plan d'appui (19) sur le bâti de machine (11).

4. Dispositif selon la revendication 3, **caractérisé en ce que** les premiers organes de renvoi (15, 16) de la surface d'appui restante (2, 3) peuvent être reliés aux poulies de renvoi (20) du deuxième plateau de travail (6).

5. Dispositif selon la revendication 3, **caractérisé en ce que** le deuxième plateau d'appui (6) est guidé latéralement sur le bâti de machine (11).

6. Dispositif selon la revendication 4 ou 5, **caractérisé en ce que** le deuxième plateau de travail (6) peut, après avoir totalement pris en charge la pièce (7), être déplacé hors de la région du premier plateau de travail (4) sans rotation de la bande transporteuse sans fin (21).

7. Procédé pour couper et évacuer sur un dispositif d'appui des pièces en forme de plaques qui peuvent être coupées au moyen d'un dispositif de coupe, le dispositif d'appui (1) présentant une première surface d'appui (2) et une deuxième surface d'appui (3) qui forment conjointement un premier plateau d'appui (4) et qui sont distantes l'une de l'autre et forment une fente (8), qui se trouve au moins en dessous de l'unité de coupe (5) du dispositif de coupe et est déplacée, conformément au déplacement de l'unité de coupe (5), par allongement de l'une (2, 3) des surfaces d'appui et raccourcissement simultané de l'autre surface d'appui (3, 2),
**caractérisé en ce que**
pour enlever la pièce achevée (7), la fente (8) est déplacée à une extrémité du premier plateau d'appui (4), de sorte qu'une surface d'appui (2, 3) porte la pièce,
à la place de l'autre surface d'appui (3, 2), un deuxième plateau d'appui (6) est déplacé avec la première surface d'appui (2, 3) vers l'autre extrémité du premier plateau d'appui (4), la surface d'appui restante (2) se raccourcissant alors et remettant totalement la pièce (7) au deuxième plateau d'appui (6), et ensuite
le deuxième plateau d'appui (6) muni de la pièce (7) est déplacé hors de la région du premier plateau d'appui (4).

8. Procédé selon la revendication 7, **caractérisé en ce que** la pièce (7) est prise en charge au moyen d'une bande transporteuse sans fin (21) du deuxième plateau d'appui (6) qui est déplacée à la manière de chenilles, la bande transporteuse sans fin (21) étant reliée au premier plateau d'appui (4) et entraînée par ce dernier.

9. Procédé selon la revendication 8, **caractérisé en ce que**, à la suite de la prise en charge de la pièce (7) par le deuxième plateau d'appui (6), le deuxième plateau d'appui (6) est séparé du premier plateau d'appui (4) et il est déplacé hors de la région du premier plateau d'appui (4) sans rotation de la bande transporteuse (21).
